# EUROPEAN PATENT SPECIFICATION

(11) **EP 1 815 314 B1**
(45) Date of publication and mention of the grant of the patent: **03.09.2014**
(21) Application number: 05799536.7
(22) Date of filing: 07.11.2005
(51) Int. Cl.: G06F 3/033

(54) **METHOD AND DEVICE FOR DATA MANAGEMENT IN AN ELECTRONIC PEN**
VERFAHREN UND EINRICHTUNG ZUR DATENVERWALTUNG IN EINEM ELEKTRONISCHEN STIFT
PROCÉDÉ ET DISPOSITIF DE GESTION DE DONNÉES DANS UN STYLO ÉLECTRONIQUE

(30) Priority: 05.11.2004 SE 0402710; 05.11.2004 US 625167 P; 02.06.2005 SE 0501265; 06.06.2005 US 687332 P
(43) Date of publication of application: 08.08.2007
(73) Proprietor: Anoto AB, 227 22 Lund (SE)
(72) Inventor: ZANDER, Johan, S-211 56 Malmö (SE); LYNGGAARD, Stefan, S-224 79 Lund (SE)
(74) Representative: Perklev, Karin Cecilia
(86) International application number: PCT/SE2005/001663
(87) International publication number: WO 2006/049573

(56) References cited:
- WO-A1-00/72230
- WO-A1-00/72230

## Description

### Cross-Reference to Related Applications

The present application claims the benefit of U.S. provisional patent application No. 60/625,167, filed on November 5, 2004; Swedish patent application No. 0402710-8, filed on November 5, 2004; U.S. provisional patent application No. 60/687,332, filed on June 6, 2005; and Swedish patent application No. 0501265-3, filed on June 2, 2005.

### Field of the Invention

The present invention generally relates to management of digitally recorded data, and in particular to data management processes in an electronic pen.

### Background art

Electronic pens can be used for generation of information that electronically represents handwritten entries on a product surface. One type of electronic pen operates by capturing images of a position code on the product surface. Based upon the images, the pen is capable of electronically recording a sequence of positions (a pen stroke) that reflects the pen motion on the product surface.

WO 00/72230 discloses such an electronic pen which transmits the electronic pen strokes one by one in near real time to a nearby printer. The printer relays the pen strokes to a network server which implements a dedicated service. The service processes the pen strokes and may cause the printer to print a position-coded response sheet. When the pen is out-of-range of the printer, the pen buffers the pen strokes in internal memory. When the pen once again is within range of the printer, it transfers any buffered pen strokes in the same form as pen strokes that are directly transmitted to the printer. This pen is designed to operate in online communication with the printer/network server. The pen always outputs pen strokes sequentially, i.e. strictly in the order they were created, thereby making the pen stroke transport process transparent to the user. At the same time, this principle of operation limits the pen's utility.

### Summary of the Invention

The object of the invention is to provide an electronic pen with improved versatility over prior art pens.

Generally, the objects of the invention are at least partly achieved by means of a method in an electronic pen apparatus according to claim 1, an electronic pen apparatus according to claim 28, and a system for interacting with a coded product surface according to claim 29, preferred embodiments being defined by the dependent claims.

Still other objectives, features, aspects and advantages of the present invention will appear from the following detailed disclosure, from the attached dependent claims as well as from the drawings.

### Brief Description of the Drawings

The invention will now be described in more detail with reference to the accompanying schematic drawings.
Fig. 1 illustrates a logical division of an abstract position-coding pattern into an addressable tree structure of page units.
Fig. 2 is a cross-sectional view of an electronic pen that implements the principles of the present invention.
Figs 3A-3B illustrate information management systems, and communication paths therein, for generation and processing of offline and online data, respectively.
Fig. 4 illustrates the relation of a template definition and a page description to a final position-coded product.
Fig. 5 illustrates an embodiment of a system of software modules for controlling the operation of the pen of Fig. 2.
Fig. 6 is an overview of a process for generating position data in an electronic pen according to an embodiment of the invention.

### Detailed Description of the Invention

### GENERAL

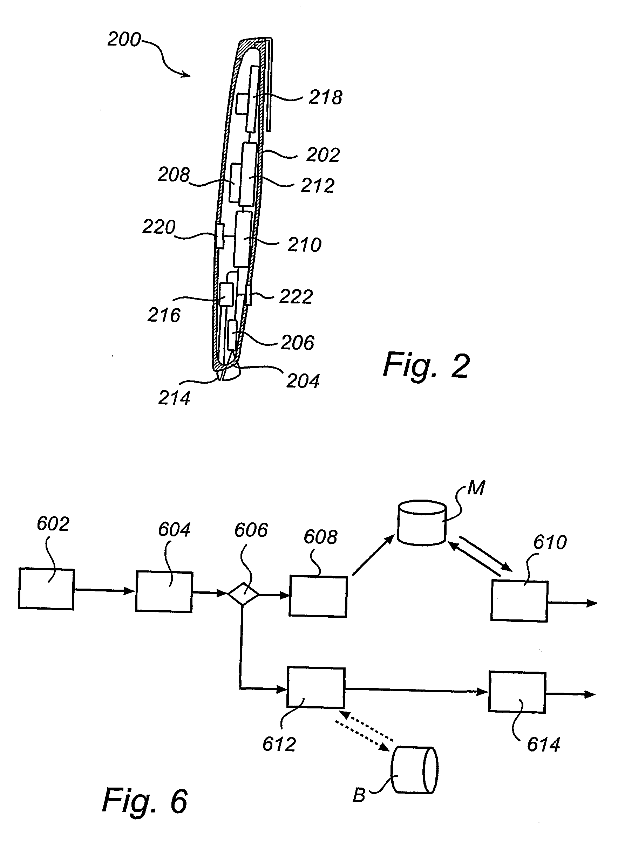

Fig. 6 gives a principal overview of processes in an electronic pen according to an embodiment of the present invention. The pen captures 602 images of a surface which is provided with a coding pattern. The images are processed 604 to generate a sequence of data items, typically one position for each image. These positions are then continuously input to an offline process or an online process, or both, based upon a selection mechanism 606. In the offline process, the data items are stored 608 in a persistent memory M in the pen. Then, at a later time and typically initiated by a pen user, the memory M is accessed 610 based upon a selection criterion, and resulting positions are output from the pen. The selection criterion typically indicates positions that originate from a specific part of the coding pattern. In the online process, the positions may be buffered 612 in a temporary memory B, at least while the pen is connecting to an external device, before being output 614 from the pen. The online process operates to output 614 the positions sequentially and essentially in real time with the image processing 604.

The offline process allows the pen user to create, independently of any external device, a set of electronic documents which each comprises pen strokes generated by the pen. The user can then later bring the pen to output one or more selected documents, or part of a document, irrespective of the particular order in which the pen strokes were generated by the pen.

The online process, on the other hand, allows the pen user to directly interact with the pen strokes as they are generated by the pen, by interactive feedback being given from a receiving device to the pen user via a local peripheral, such a display or speaker, or even the pen itself.

The provision of both an offline and an online operation process in one and the same electronic pen, results in an increased versatility of the pen. For one, the user experience may be improved, since it is now possible to implement new and very powerful ways for a pen user to generate and interact with handwritten data.

### ABSTRACT PATTERN

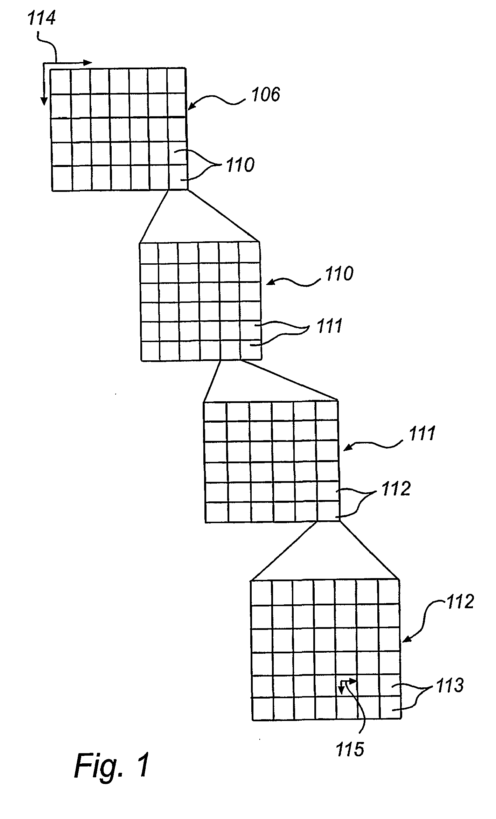

The following description is based on the use of an abstract position-coding pattern, which is subdivided into page units. Examples of such abstract patterns are given in US 6,570,104; US 6,663,008 and US 6,667,695. The page units are individually addressable in a hierarchy of page unit groups. Fig. 1 shows an example, in which the pattern 106 contains "segments" 110 which in turn are divided into a number of "shelves" 111, each containing a number of "books" 112 which are divided into a number of aforesaid page units 113, also called "pattern pages". Suitably, all pattern pages have the same format within one level of the above pattern hierarchy. For example, some shelves may consist of pattern pages in A4 format, while other shelves consist of pattern pages in A5 format. The location of a certain pattern page in the abstract pattern can be noted as a page address of the form: segment.shelf.book.page, for instance 99.5000.1.1500, more or less like an IP address. For reasons of processing efficiency, the internal representation of the page address may be different, for example given as an integer of a predetermined length, e.g. 64 bits.

In one example, each segment consists of more than 26,000,000 pattern pages, each with a size of about 50x50 cm². In one embodiment, at least one such segment is divided into 5,175 shelves, each consisting of 2 books with 2,517 pages each.

Each pattern page may be regarded as an actual subset of the coding pattern, or as the absolute positions that are coded by the subset. Each such absolute position may be represented as a global position in the coordinate system 114 of the overall pattern, or as logical position, i.e. a page address and a local position in a coordinate system 115 within a pattern page.

A suitable electronic pen may record its motion on a position-coded product as either a sequence of global positions (i.e. a global pen stroke) or as a page address and a sequence of local positions on the corresponding pattern page (i.e. an addressed pen stroke).

The following description is also based on each product containing a position code that corresponds to one or more pattern pages. It is to be noted, however, that the position code on a product need not conform to a pattern page. Thus, one or more subsets from one or more pattern pages may be arbitrarily arranged on the product. The product may also have embedded functionality in that the position code on the product is associated with one or more functions that selectively operate on electronic pen strokes that include certain positions.

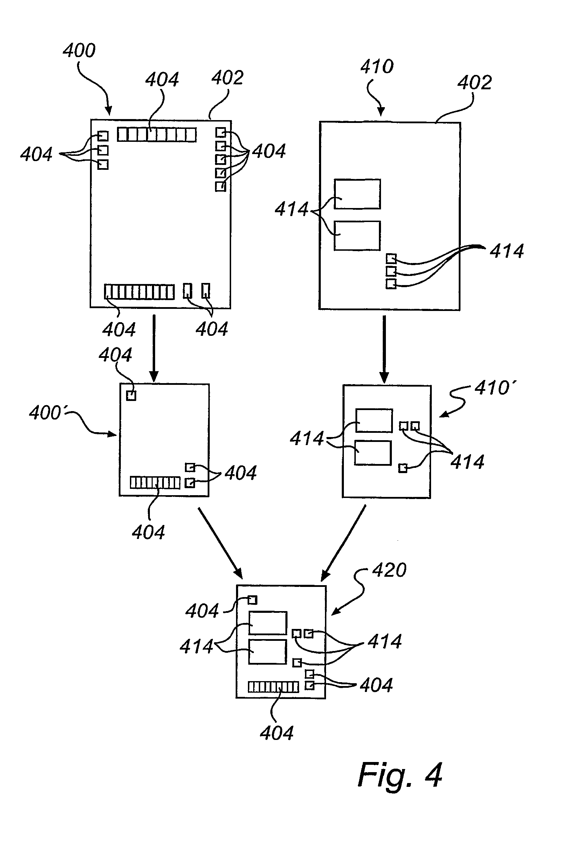

In one such embodiment, the functionality of the pen may be at least partly controlled by the user manipulating the pen on a specific part of the position-coding pattern. To this end, the pen may store one or more templates that define how the pen is to operate on the information that is recorded from different parts (functional areas) of the position-coding pattern. In one embodiment, a specific page unit group in the page hierarchy, e.g. a segment or a shelf, is associated with a given template definition, which thus is valid for all pattern pages within that specific page unit group. The template defines the size, placement and function of any functional areas that may affect the operation of the pen. Such functional areas are denoted as "pidgets". Fig. 4 illustrates a template 400 as laid out on a pattern page 402, showing the placement of different pidgets 404.

In a template, all positions not occupied by any pidget within a pattern page are defined as belonging to a drawing area, which thus may be regarded as an implicit pidget. The positions detected in the drawing area are interpreted by the pen to be recorded as pen strokes.

The pidgets may, i.a., indicate a trigger function, a service selection function, a device selection function, a local action function, or a feedback function. The trigger function triggers the pen to expose data, as will be further explained below. The service selection function identifies a service, which may convey context information (e.g. email, fax, SMS) that affects the pen's processing of recorded positions, and/or content information (e.g. page, book, shelf) that affects the pen's selection of positions to be processed. The device selection function identifies a connection device for the pen (e.g. PC, mobile device, LAN access point). The local action function initiates an action that affects pen memory. The feedback function causes the pen to activate an internal MMI such as a vibrator, display or speaker.

In one embodiment, the template defines each pidget 404 by a pidget ID, and a size and placement in local positions within a pattern page 402 (Fig. 4). The pidget ID is a 16-bit identifier that determines the pidget function. The pidget ID consists of a pidget type (bits 8-15) and a pidget number (bits 0-7). The pidget type identifies the above-mentioned function, and the pidget number may identify a subfunction.

The above-mentioned trigger pidget can be either specific or generic. A specific trigger pidget has a pidget ID that identifies, via the pidget number, both a specific connection device and a specific service. Whenever the pen records a position within such a specific trigger pidget, it is capable of effecting an exposure of data. A generic trigger pidget has a pidget ID that does not identify a specific connection device and/or a specific service. To trigger an exposure of data, the generic trigger pidget must be used in combination with a device selection pidget and/or a service selection pidget, by the pen recording corresponding positions and forming a trigger pidget ID which identifies both a valid service and a valid connection device.

In one embodiment, a specific page unit group in the page hierarchy, e.g. a segment, is associated with one or more functional attributes, which thus are valid for all pattern pages within that specific page unit group. One such attribute is a STREAMING attribute which indicates to the pen that recorded positions falling within a page unit group should be output in real time to an external device. A DO_NOT_STORE attribute of a page unit group causes the pen to refrain from storing recorded pen strokes falling within this page unit group. Other functional attributes may be used to classify page unit groups into different types, e.g. into FORMS or NOTEPADS. Generally speaking, the functional attributes may be set for any page unit group in the page hierarchy and provides the advantage of separating comprehensive logic from the logic provided by the templates. Thus, the functional attributes provide a second level of logic, which can be set independent of the template logic and which is made available to a pen control system for a whole range of pattern pages.

### ELECTRONIC PEN

Fig. 2 illustrates an embodiment of the above-mentioned pen 200, which has a pen-shaped casing or shell 202 that defines a window or opening 204, through which images are recorded. The casing contains a camera system, an electronics system and a power supply.

The camera system 206 comprises at least one illuminating light source, a lens arrangement and an optical image reader (not shown in the Figure). The light source, suitably a light-emitting diode (LED) or laser diode, illuminates a part of the area that can be viewed through the window 204, by means of infrared radiation. An image of the viewed area is projected on the image reader by means of the lens arrangement. The image reader may be a two-dimensional CCD or CMOS detector which is triggered to capture images at a fixed or variable rate, typically of about 70-100 Hz.

The power supply for the sensor device is advantageously a battery 208, which alternatively can be replaced by or supplemented by mains power (not shown).

The electronics system comprises a control unit 210 which is connected to a memory block 212. The control unit 210 is responsible for the different functions in the electronic pen and can advantageously be implemented by a commercially available microprocessor such as a CPU ("Central Processing Unit"), by a DSP ("Digital Signal Processor") or by some other programmable logical device, such as an FPGA ("Field Programmable Gate Array") or alternatively an ASIC ("Application-Specific Integrated Circuit"), discrete analog and digital components, or some combination of the above. The memory block 212 comprises preferably different types of memory, such as a working memory (e.g. a RAM) and a program code and persistent storage memory (a non-volatile memory, e.g. flash memory). Associated software is stored in the memory block 212 and is executed by the control unit 210 in order to provide a pen control system for the operation of the electronic pen.

The casing 202 also carries a pen point 214 which allows the user to write or draw physically on a surface by a pigment-based marking ink being deposited thereon. The marking ink in the pen point 214 is suitably transparent to the illuminating radiation in order to avoid interference with the opto-electronic detection in the electronic pen. A contact sensor 216 is operatively connected to the pen point 214 to detect when the pen is applied to (pen down) and/or lifted from (pen up) a surface, and optionally to allow for determination of the application force. Based on the output of the contact sensor 216, the camera system 206 is controlled to capture images between a pen down and a pen up. These images are processed by the control unit 210 to generate a sequence of positions that represent the absolute location and movement of the pen on a coded product.

The generated positions can be output by the pen, via a built-in communications interface 218, to a nearby or remote apparatus such as a computer, mobile telephone, PDA, network server, etc. To this end, the communications interface 218 may provide components for wired or wireless short-range communication (e.g. USB, RS232, radio transmission, infrared transmission, ultrasound transmission, inductive coupling, etc), and/or components for wired or wireless remote communication, typically via a computer, telephone or satellite communications network.

The pen may also include an MMI (Man Machine Interface) 220 which is selectively activated for user feedback. The MMI may include a display, an indicator lamp, a vibrator, a speaker, etc.

Still further, the pen may include one or more buttons 222 by means of which it can be activated and/or controlled.

### OFFLINE SYSTEM

In the offline process (offline mode), the pen may be operated to output offline data, by selectively retrieving pen stroke data from its memory block and incorporating this data in a file object which is exposed to external devices. Specifically, exposing offline data involves spatially collating pen stroke data stored in the memory block 212 (Fig. 2). Typically, the pen stroke data is collated by page address. Each file object may include pen stroke data from one or more specific pattern pages. Generally, the offline data does not represent the chronological order in which pen strokes were recorded by the pen, but is rather a collection of all pen stroke data recorded on a particular part of the position-coding pattern. Within a file object, the pen stroke data may or may not be arranged chronologically for each pattern page.

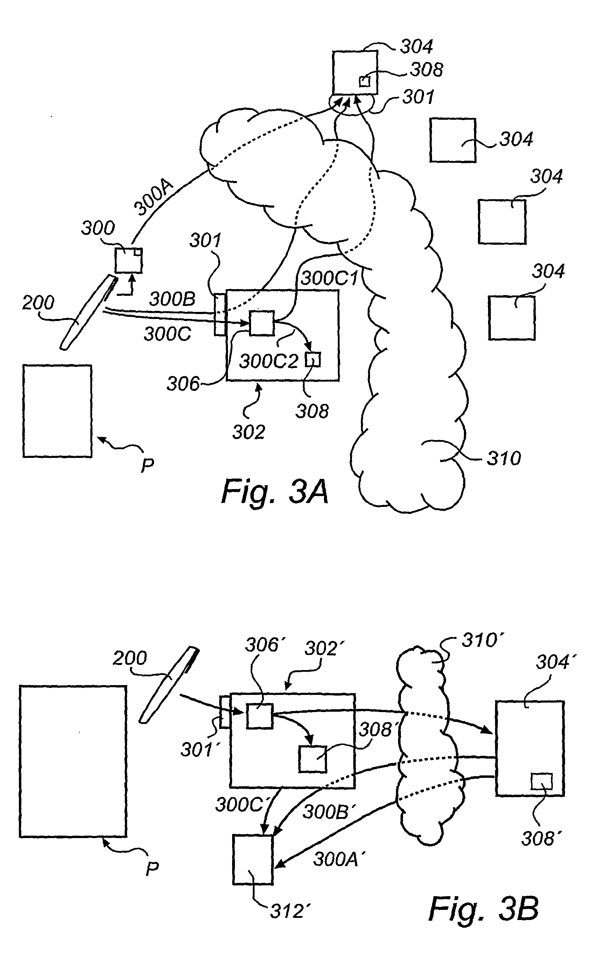

Fig. 3A is an overview of an information management system which may receive the offline data from the electronic pen.

In one embodiment, the file object 300 is pushed from the pen 200 to a communications interface 301 on a given local or remote receiving device 302, 304, as indicated by paths 300A-300C in Fig. 3A. Path A is set up directly between the pen 200 and the remote device 304, via a communication network 310. Path 300B is set up from the pen 200 to the remote device 304 through the local device 302 and via the network 310. Path 300C is set up between the pen 200 and the local device 302. In another embodiment, the file object 300 is exposed to be pulled from the pen 200 by the receiving device 302, 304, along any one of paths 300A-300C. In yet another embodiment, the pen 200 does not generate any file object. Instead, the receiving device 302, 304 is capable of communicating a data request to the pen 200. After having received the requested data from the pen 200, the device 302, 304, generates the file object 300 to include this data, or data derived therefrom.

The local or remote receiving device may include a flow controller 306 that relays the file object 300, or data derived therefrom, to an application program 308 that resides either locally on the receiving device or on a remote device, as exemplified by paths 300C1, 300C2. Examples of such flow controllers are given in US 2003/0046256, WO 03/056420 and WO 03/105064. More than one flow controller may be involved in the data transfer from the pen to the application program.

The flow controller 306 may be arranged to extract relay data from the file object 300, and relay appropriate data to a destination address, for example via HTTP (Hypertext Transfer Protocol) post, SMTP (Simple Mail Transfer Protocol), X.400, MMS (Multimedia Messaging Service), SMS (Short Message Service), database sync, etc. The destination address may be directly or indirectly given by the relay data. In one embodiment, the flow controller 306 may thus extract an explicit destination address from the file object. In another embodiment, the flow controller 306 may include a lookup table that associates an address indicator with a destination address. For example, the address indicator may be a page address, a global position, a pidget ID, a pen-resident parameter value etc. The appropriate data to be relayed may also be given by the file object. As an alternative to relaying the file object 300, the flow controller 306 may send a notification to the destination address that the file object 300 is available for retrieval.

Upon receipt of the file object 300, or the data derived therefrom, the application program 308 may access a page description that defines the originating physical product, i.e. the product from which the position data in the file object 300 originates (indicated by reference numeral P in Fig. 3A). The page description defines the layout of the originating product P. This layout may include both the physical layout and the functional layout of the product. The physical layout includes supporting graphics, i.e. human-understandable information aimed at instructing, controlling and/or informing a user. The functional layout defines the placement and size of any so-called user areas on the relevant pattern page(s). A user area is an application-specific functional area, with a placement, size and function that may be unique to the specific application program 308. In the page description, each user area may be assigned an identifier of a dedicated processing instruction, which is accessible to the application program. Alternatively, each processing instruction may be included in the page description. The physical layout may also be included in the page description, either as explicit instructions for generation of the physical layout, or as an indicator of a network storage address of a computer file that defines the physical layout. The page description may also define the arrangement and placement of the pattern on the product, to allow the processing application to display the pen strokes in their proper alignment with the supporting graphics.

The structure, functionality and use of page descriptions are further described in US 2002/0040816 and WO 03/105064.

Fig. 4 further illustrates the interrelation between pattern page 402, template 400, page description 410 and physical product 420. The physical product 420 includes a position code (not shown) that defines positions within one or more pattern pages 402 (only one shown in Fig. 4). These positions are associated with one or more functions, which are either predefined in the system (for pidgets 404) or application-specific (for user areas 414). The pidgets 404 have a predefined placement and size within the pattern page 402, as given by the template 400. However, they may have any placement on the physical product 420, by parts of the position-coding pattern being "cut out" and re-assembled in any fashion on the product 420. The page description 410 defines the placement, size and function of any additional user areas 414 on the pattern page 402. Thus, apart from its physical layout, the product 420 has one functional layout part 400' given by the template 400 and one functional layout part 410' given by the page description 410.

The pen stroke data in the file object 300 (Fig. 3A) is self-supporting or autonomous, i.e. the receiving application program 308 is able to access and process the data without any need for communication with the pen 200 that created the data.

The file object 300 may be generated by the pen 200 in different levels of refinement. For example, the file object 300 may contain any one of the following, or combinations thereof:
(1) raw pen stroke data, i.e. the temporally coherent sequences of global or logical positions that make up the pen strokes;
(2) a picture of the pen strokes, i.e. an image that directly represents the recorded positions;
(3) refined pen stroke data, typically template-related information such as identifications of any pidgets touched by the pen strokes and/or the results of the functions associated with such pidgets.

The file object 300 may, in any one of the refinement levels, contain additional pen- or stroke-related data, such as timestamps of the positions in the pen stroke and of any pidgets, force values of the positions in the pen stroke, and any pen-resident parameter(s). The timestamps will allow the application program or the flow controller to combine strokes and/or pidgets based on their mutual time of recording. The force values will allow the application program to render an image of the strokes with force-dependent line width.

The pen-resident parameters are pre-stored in the memory block 212 (Fig. 2) to identify a characteristic of the pen itself or of the owner/user of the pen. These parameters may be used by the receiving application program 308 (Fig. 3A), and may thus be at least selectively included in the file object 300. The inclusion of a pen-resident parameter may be decided by the page address(es) of the strokes in the file object, and/or by the above-mentioned context or content information. The pen-resident parameters may include: a unique identifier of the pen, a language identifier, a name, a street address, an electronic mail address, a phone number, a pager number, a fax number, a credit card number, etc.

The file object 300 may also contain freestanding data which is related neither to the pen strokes recorded by the pen, nor to the pen itself. The freestanding data may include any kind of non-position data, which may be derived by a sensor in the pen (e.g. camera system 206) or be received by the pen via the communications interface 218 (Fig. 2). Such freestanding data may be in the form of one or more images (i.e. still or moving images), or of data extracted from such images (e.g. data decoded from bar codes or any other machine-readable codes, or machine-coded text resulting from optical character recognition (OCR) processing). In yet another example, the freestanding data may be audio data recorded by an audio sensor in the pen or received over the communications interface.

The file object 300 may be either character-encoded or non-character-encoded (e.g. binary), and may be in any suitable format. The file format may be proprietary or standardized, for example XML (Extensible Markup Language), HTML (Hypertext Markup Language), XForms, PDF (Portable Document Format), etc.

### ONLINE SYSTEM

In the online process (online mode), the pen is operated to stream data to a receiving device, the data being denoted online data in the following. The online data may be received by an application program that implements an interactive service. A system for such interactive use of the online data is shown in Fig. 3B.

In Fig. 3B, the pen 200 feeds the online data, via short-range communication, to a communications interface 301' on a local receiving device 302'. The online data is transferred, optionally via a flow controller 306' of the aforesaid type, to a dedicated application program 308' which typically is run by a processing unit (CPU) locally on the receiving device, but alternatively may be run by processing unit (CPU) on a remote device 304' which may be accessible via a communication network 310'. The application program 308' processes the data, based on the aforesaid page description, and generates feedback data which is presented to the user in near real time via a local feedback device 312' such as a display screen or a speaker (paths 300A'-300C'). Thus, the application program 308' allows the user to access the service in near real time. The user may input handwritten data to the service and/or control the service interactively by manipulating the pen 200 on the coded product P. The service may also display the handwritten data sequentially on the screen, as it is received from the pen, to reproduce the pen's movement on the coded product in near real time.

In the preferred embodiment, which is described in further detail below, the pen operates by default in the offline mode, and only activates the online mode whenever it records a position from a segment which is associated with a STREAMING attribute (online segment). It deactivates the online mode whenever it records a position from a segment which is not associated with a STREAMING attribute.

In another embodiment, the pen automatically activates the online mode when the pen has been controlled to expose offline data (a file object). This embodiment allows the user to generate handwritten data offline, and then operate interactively on the same handwritten data when this data is deemed received by an application program in an external device. For example, the user may control the display of the handwritten data, such as via zooming or scrolling, by manipulating the pen on the originating product. In another example, the application program may execute a HWR process on the handwritten data and allow the user to interactively correct, annotate or edit the handwritten input by manipulating the pen on the originating product. The application program may automatically operate the online data on the most recently received offline data. Alternatively, the online data may be used by the application program to retrieve relevant offline data from a memory accessible to the external device, whereupon the application program operates the online data on this offline data. For example, the application program may use the page address of the online data to retrieve offline data with the same page address.

The pen operation in the online mode may be partially controlled by pidgets, like the offline mode. However, in a preferred embodiment, the templates of the online segments are devoid of any pidgets other than the drawing area. Alternatively, the pen may be designed to ignore any such pidgets, when in online mode. To implement pen MMI feedback, the pen may be designed to selectively activate its MMI 220 (Fig. 2) based on feedback commands which are received on the communications interface 218 from the application program. Thereby, all user feedback in the online mode is controlled by the application program.

The pen may feed the online data to the receiving device that is currently connected to the pen. Alternatively, the pen may initiate a connection to a default receiving device for online data, or to the receiving device to which the pen was last connected while in online mode. In another alternative, the receiving device may be given by the pen detecting a dedicated pidget, or by the user physically connecting the pen to the receiving device. It is also conceivable that the connection is initiated from the receiving device.

### PEN CONTROL SYSTEM

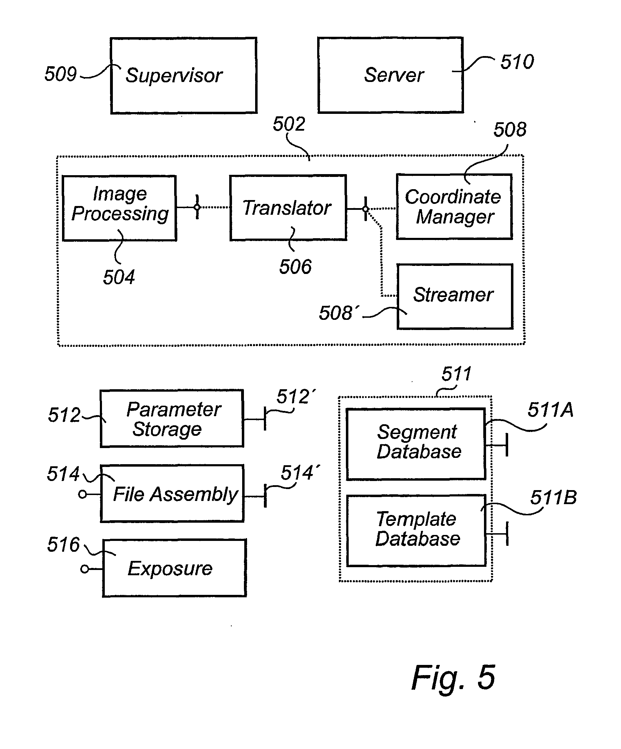

The pen 200 operates by software being executed in the control unit 210 (Fig. 2). The overall software architecture will now be described with reference to Fig. 5 which illustrates some main software components.

The pen system software is based on modules. A module is a separate entity in the software with a clean interface. The module is either active, by containing at least one process, or passive, by not containing any processes. The module may have a function interface, which executes function calls, or a message interface, which receives messages. The active and passive modules are basically structured as a tree where the parent to a module is responsible for starting and shutting down all its children.

The pen system software also implements an event framework to reduce dependencies between modules. Each module may expose a predefined set of events that it can signal. To get a notification of a particular event, a module must be registered for this event in an event register. The event register may also indicate whether notification is to take place by posting of a message, or as a callback function.

A combination of software modules implements a so-called coordinate pipeline 502, which is a flow of events for storage of strokes (offline mode) or streaming of positions (online mode). A stream of global positions from an Image Processing module 504 is conveyed to a Translator module 506, which converts the global positions to logical positions. If the Translator module 506 detects a stroke passing through a pidget, a corresponding pidget event is triggered. The Translator module 506 also generates a specific attribute event if the segment of the global position is associated with a functional attribute. The pidget and attribute events may cause appropriate action in other software modules, by these modules including an event listener that determines the respective relevance of the pidget and attribute events. Unless a DO_NOT_STORE attribute event is generated, the logical positions are received by a Coordinate Manager module 508, which assembles them to addressed pen strokes that are encoded in a compact representation and stored in the memory block 212 (Fig. 2).

If a STREAMING attribute event is generated, the logical positions are also received by a Streamer module 508', which generates the online data, while an Exposure module 516 is caused to establish an online connection to a receiving device.

Thus, in this particular embodiment, the pen may operate exclusively in the offline mode (by default), exclusively in the online mode (if the imaged pattern is associated with both a STREAMING attribute and a DO_NOT_STORE attribute) or in both the offline and online modes (if the imaged pattern is associated with a STREAMING attribute, but not a DO_NOT_STORE attribute).

### 1. Supervisor

As shown in Fig. 5, the pen system software includes a Supervisor module 509 which directly or indirectly initiates all other modules. The Supervisor module 509 includes an interface to the event register, so that modules can register themselves on the events they want to receive. The Supervisor module 509 also generates control events that are available to the listeners in other software modules.

### 2. Server

A Server module 510 is provided as a coordinator of events in the pen. It makes decisions what the pen should do based on the state of the system and incoming events.

### 3. Image Processing

The Image Processing module 504 will not be further described herein. It can for example be implemented according to Applicant's prior publications: US 2003/0053699, US 2003/0189664, US 2003/0118233, US 2002/0044138, US 6,667,695, US 6,732,927, US 6,929,183, US 2003/0128194, and references therein.

### 4. Position database

The pen includes a position database 511 which resides in the memory block 212 (Fig. 2) of the pen and which can be edited or updated via the communications interface 218 (Fig. 2). The position database 511 is used by the Translator module 506 and contains a segment database 511A, which associates each segment with a template, given by a template index, and optionally also with one or more functional attributes. The segment database 511A is suitably cached in a RAM memory for fast access. The position database 511 also contains a template database 511B which associates the template index with a pointer to a template definition, which may be stored as a property in non-volatile memory in the pen. Such a template definition may contain: Page X Size (16 bits), Page Y Size (16 bits), Number of pages (16 bits), Number of pidgets (16 bits), Pidget List (Number of pidgets long). The pidget list consists of a number of pidgets. Each pidget may be defined by: a pidget ID (16 bits, upper eight is Type, lower eight is Number), X upper left coordinate (16 bits), Y upper left coordinate (16 bits), Width (16 bits), Height (16 bits).

### 5. Translator

The above-mentioned Translator module 506 uses an algorithm that is based on known pattern formatting data to translate the global positions to logical positions. The pattern formatting data defines the hierarchical division of the coding pattern into pattern pages (Fig. 1). Part of the pattern formatting data may be pre-stored in the pen, while other parts may be dynamically derived from the position database 511 in the pen. For example, if all segments have a predetermined size, a global position may be processed to identify the current segment of this global position. Knowing the current segment, data on its division may then be derived from its template definition in the position database 511, whereupon the global position may be further processed to identify the current shelf, book, page, and local position, i.e. a full logical position. If the pen usually is operated on one and the same pattern page for some time, major speedup may be achieved by caching the boundaries of the current pattern page in global positions, and by checking any new global position against these boundaries. As long as the new global positions fall within the boundaries, the need for a recalculation of the page address is eliminated.

The Translator module 506 also detects if any recorded positions fall within a pidget on the current pattern page, by mapping the local positions against the relevant template definition, given by the position database 511. In one embodiment, only one pidget can be identified for each stroke, i.e. if several pidgets are identified, only the last pidget is considered. A corresponding pidget event is then generated for notification to other software modules. If no pidget is identified, the position is assumed to fall within a drawing area.

The Translator module 506 also detects if the current segment is associated with any functional attributes. A corresponding attribute event is then generated and notified to indicate each such functional attribute to other software modules.

Thus, for each global position, the Translator module 506 provides at least a page address and a local position, and it may also provide an attribute indicator. For each temporally coherent sequence of positions, i.e. a stroke, the Translator module 506 may also provide a pidget ID. Each logical position is associated with a timestamp, given by a timing circuit of the control unit 210 (Fig. 2), and a force value, given by the contact sensor 216. Similarly, each pidget ID is associated with a timestamp. In addition, it may have an interface which allows other modules to look up information in the position database 511 about templates, functional attributes and pidgets.

### 6. Coordinate Manager

The Coordinate Manager module 508 receives the logical positions from the Translator module 506. Before storage, it groups the logical positions into temporally coherent sequences, i.e. strokes. The Coordinate Manager module 508 may then preprocess each stroke for compression and store the result in non-volatile memory. Examples of such compression and storage are given in US 2003/0123745 and US 2003/0122802.

The Coordinate Manager module 508 also contains an interface for other modules to search for stored strokes, e.g. based on page address, and to retrieve strokes in an offline transport format. In one embodiment, the offline transport format is binary and includes the following data: a start time for each stroke, local positions in each stroke, and a force value for each position.

Optionally, the offline transport format may include orientation data which is derived from the captured images to indicate the three-dimensional orientation of the pen during the recording of positions.

### 7. Streamer

The Streamer module 508', which may be activated to receive the logical positions from the Translator module 506, has three internal states: Disconnected, Connecting, and Connected. It enters the respective state based on the Connecting, Connected and Connection Failure events generated by the Exposure module 516 (see below).

In the Disconnected state, the pen system software is in the offline mode. In the Connecting state, the Streamer module 508' sequentially stores all logical positions (together with force value and timestamp) output by the Translator module 506 in a buffer memory (typically RAM) included in the memory block 212 (Fig. 2). The duration of the Connecting state is typically about 1-10 seconds. In the Connected state, the Streamer module 508' generates online data according to a predetermined binary online transport format. In one embodiment, this format includes three different messages:
**NewSession**(timestamp, pen identifier)
**NewPosition** (timestamp, page address, position, force value)
**PenUp** (timestamp)

The Streamer module 508' generates the NewSession message upon detection of a Connected event and includes a timestamp that reflects the time when the online connection was established. The Streamer module 508' then generates NewPosition messages to each include one logical position, a force value and a time value. The time value reflects the time when the originating image was captured by the pen camera system. Each NewPosition message may also include the aforesaid orientation data. Whenever the pen is moved out of contact with the writing surface, as indicated by the contact sensor 216 (Fig. 2), the Streamer module 508' generates the PenUp message.

In an alternative embodiment, the page address is output only once for each pen stroke. To further reduce the amount of data to be transferred, local positions may be eliminated from each pen stroke according to a resampling criterion and/or each local position may be given as a difference value to a preceding local position in the same stroke, for example as described in aforesaid US 2003/0123745 and US 2003/0122802.

The Streamer module 508' always processes the logical positions in the order they were generated by the Image Processing module 504. Thus, it first retrieves and processes the positions that were stored in the buffer memory during the Connecting state, and then processes the subsequently generated positions, if necessary via intermediate storage in the buffer memory.

If the pen control system is instructed to shut down or switch to the offline mode, the Streamer module 508' will remain in the Connected state until it has processed all data in the buffer memory, thereby causing the Exposure module 516 to output this data to the online connection. If a Connection Failure event is received by the Streamer module 508' in the Connecting state, the Streamer module operates to delete all data from the buffer memory.

The online transport format allows a receiving device to distinguish between data generated during the Connecting state and the Connected states, respectively. The timestamps of positions recorded during the Connecting state will precede the timestamp of the NewSession message, whereas timestamps of positions recorded during the Connected state will succeed the NewSession message timestamp. Alternatively or additionally, a bit value may be included in each NewPosition message to indicate whether its data has been buffered or not.

### 8. Parameter Storage

The pen system also includes a Parameter Storage module 512. All other modules that have a need for keeping a state after pen shutdown call this module to store their state parameters. The Parameter Storage module 512 also handles pen-resident parameters set in production, such as unique pen properties (pen identifier, etc.) or calibration parameters, as well as the template definitions. Each parameter is stored with name, size and data in non-volatile memory. The module 512 provides an interface 512' for insertion, retrieval and deletion of parameters.

### 9. File Assembly

A File Assembly module 514 is implemented to generate the file object 300 (Fig. 3A) to be exposed to data handlers outside the pen. The module 514 is implemented to listen for a dedicated event, such as a trigger pidget event. Upon detection of the dedicated event, it retrieves from the Coordinate Manager module 508 the strokes associated with the trigger pidget, in binary offline transport format.

Evidently, the functionality of the File Assembly module 514 will depend on the level of refinement. The above steps are sufficient for level 1 refinement.

For level 2 refinement, the pen system may include a Stroke Converter module (not shown) which transfers a given set of strokes to a picture buffer in the memory block 212 (Fig. 2), and a picture encoder which encodes the picture buffer to an image of a given type, for example a bitmap format or a vector graphics format.

For level 3 refinement, the module 514 may retrieve data items from other modules (not disclosed), given by other pidgets associated with the trigger pidget. Such data items may include machine-coded characters resulting from handwriting recognition (HWR) of pen strokes, machine-coded characters retrieved from pen memory, a communication address retrieved from pen memory, etc.

The module 514 may also retrieve any freestanding data to be included in the file object, such as bar code data, OCR text, audio, images, etc.

Finally, the module generates the file object 300 (Fig. 3A), which is made available to other modules via an interface 514'.

Such a file object may for example have the following structure:
**File Header** (Trigger Pidget ID, Page Address, Number of pages, Number of additional data items)
   **Page data header** (Page Address, Number of pidgets)
      **Page data** (Stroke data in offline transport format)
      **Pidget data** (Pidget ID(s), Timestamp(s))
   **Additional data** (Pen-resident parameter value(s),
   Data items resulting from pidgets, Freestanding data)

The file object allows the application program 308 (Fig. 3A), and optionally the flow controller 306, to identify and extract all or selected parts thereof.

The selection of strokes to be included in the file object may be determined from the content information that is included the trigger pidget ID. Such content information may, for example, indicate the current pattern page or book, i.e. the selected strokes should belong to the same set of pattern pages as the trigger pidget. Clearly, there are alternative ways of selecting strokes. For example, strokes may be selected from within a bounding area defined by dedicated pen strokes (i.e. the pen is moved on the product to indicate to the pen what to expose). In another example, strokes may be selected based on classifying attributes associated with pattern pages. For example, strokes may be selected from all pattern pages associated with aforesaid FORMS attribute. In yet another example, all strokes in the pen memory are automatically selected for exposure, suitably with one file object being created for each pattern page or book.

All the thus-selected strokes may be incorporated in the file object. Alternatively, only those strokes that are not represented as pidgets are incorporated in the file object.

### 10. Exposure

An Exposure module 516 is provided to provide the collected data to data handlers outside the pen. The module is implemented to listen for a dedicated event, such as a trigger pidget event or a STREAMING attribute event.

Upon detection of a trigger pidget event, it retrieves the file object from the File Assembly module 514, and exposes the file object, either by pushing the file to a specific device/port, e.g. given by a trigger pidget or device selection pidget, or by allowing an external data handler to pull the file object from the pen. For example, the file objects may be stored in a file system in the pen memory, the file system being exposed to the external data handler. For example, the file system may be exposed for browsing via USB (Universal Serial Bus), Bluetooth®, FTP (File Transfer Protocol), HTTP (Hypertext Transfer Protocol) or any other suitable protocol.

Upon detection of a STREAMING attribute event, the Exposure module 516 initiates an online connection to a specific receiving device, and generates a Connecting event. When connection is established, it generates a Connected event and starts to sequentially output the messages generated by the Streamer module 508'. If it fails to connect to the receiving device within a timeout period, it generates a Connection Failure event.

The Exposure module 516 contains all necessary protocol stacks, and is designed to be independent of transmission means, by the responsibility of setting up a link being assigned to a separate module and by working with device abstractions. The responsibility of setting up the link has been assigned to a Link Selection module (not shown). The Link Selection module handles the selection and setup of a communication link.

The invention has mainly been described above with reference to a few embodiments. However, as is readily appreciated by a person skilled in the art, other embodiments than the ones disclosed above are equally possible within the scope of the invention, which is defined and limited only by the appended patent claims.

For example, events may be generated in the pen control system by the user pressing a button on the pen or issuing a verbal command to be recorded by a microphone in the pen. Thus, the trigger pidget event or any functional attribute event may be replaced or supplemented by such an event.

In the above embodiments, the division of the abstract pattern is dynamic, in that the logical positions are calculated based upon the position database in the pen. In an alternative embodiment, the division of the abstract pattern may be static, by being encoded in the pattern. For example, US 6,330,976 discloses a coding pattern in which coding cells are tiled over the product surface, each cell coding both a local position and a page identifier. Such a pattern may implement the functional attributes as one or more flag bits encoded in the pattern. By decoding the pattern, the pen is thus capable of directly detecting its logical position and, optionally, a functional attribute.

It should also be noted that the pen may include complementary equipment for relative positioning, such as accelerometer, roller ball, triangulation device, etc. Thus, the pen may supplement the absolute positions derived from the position code with the relative positions given by the complementary equipment. In this case, the position code need only code few absolute positions on the product.

Further, the pen system software may be based on any distribution of functionality between different software modules. For example, the functionality of several modules may be implemented by a single module, for example by the Server module implementing also the functionality of the Exposure module. In fact, the pen system software need not be made up of separate modules.

Likewise, signaling of events may be omitted or reduced. In one such embodiment, attribute events are omitted. Instead, the Translator module feeds all logical positions to both the Coordinate Manager module and the Streamer module. Whenever the Translator module also detects a DO_NOT_STORE attribute, it feeds the associated logical positions only to the Streamer module. The Streamer module continuously accesses the Translator interface to check whether any received logical position is associated with a STREAMING attribute. On detection of such an attribute, the Streamer module brings the Exposure module to initiate an online connection.

Still further, the pen may output offline data in other ways than described herein. For example, the pen may establish an end-to-end communication with a receiving device, and output offline data as part of an http request to the receiving device. A protocol for such communication is further disclosed in Applicant's patent publication US 2003/0055865.

## Claims

1. A method in an electronic pen apparatus, comprising:
receiving (602) images of a product surface provided with a part of a position-coding pattern;
extracting (604) position data from said images;
selectively processing (606) the extracted position data in an online process and an offline process,
wherein the online process is operable to sequentially provide (614) the extracted position data on a communications interface (218) of the pen apparatus; and
wherein the offline process is operable to store (608) the extracted position data in an internal storage (M) of the pen apparatus;
**characterized in that** the offline process is further operable to selectively provide the extracted position data in non-sequential order on the communications interface (218),
wherein selectively provide the extracted position data comprises retrieving (610), from the internal storage and initiated by a user of the electronic pen apparatus, extracted position data recorded from a specific part of the position coding pattern, and
wherein at least one of the online process and the offline process is selected by detection of a predetermined pattern in at least one of said images, said predetermined pattern being detected from the extracted position data.

2. The method of claim 1, wherein the online process is operable to provide the extracted position data on the communications interface (218) essentially in real time with said extracting.

3. The method of claim 1 or 2, wherein each position is associated with a position area identifier, and wherein the extracted position data in said non-sequential order is collated by position area identifier.

4. The method of any preceding claim, wherein the offline process is operable to provide the extracted position data in at least one autonomous data file object (300) which is suitable for storage in a computer file system.

5. The method of any preceding claim, wherein the offline process is operable to selectively provide the extracted position data only upon detection of a dedicated trigger event.

6. The method of claim 5, wherein the dedicated trigger event results from the communications interface (218) being connected to an external device (302, 304), or from a predetermined pattern being detected in at least one of said images.

7. The method of any preceding claim, wherein the extracted position data by default is processed in the offline process, and wherein said detection causes position data extracted subsequent to said detection to be processed in the online process.

8. The method of any preceding claim, further comprising generating a dedicated processing event to indicate said detection.

9. The method of any preceding claim, wherein the online process is activated only during said detection of the predetermined pattern in said images.

10. The method of any preceding claim, wherein the extracted data comprises positions in a global coordinate system, said method further comprising: deriving a process indicator by mapping at least one of said positions against definition data stored in a memory of the pen apparatus, wherein the predetermined pattern is detected from said process indicator.

11. The method of claim 10, wherein the definition data is indicative of individually addressable position areas in the global coordinate system, each position area being associated with a position area identifier, wherein the process indicator comprises said position area identifier.

12. The method of claim 10, wherein the definition data is indicative of individually addressable position areas in the global coordinate system and associates a set of such position areas with a functional attribute, wherein the process indicator comprises said functional attribute.

13. The method of any preceding claim, wherein the online process is activated by the offline process selectively providing the extracted position data in non-sequential order on the communications interface (218).

14. The method of any preceding claim, wherein the offline process is further operable to identify, based upon the extracted position data, a function to be executed by the pen apparatus.

15. The method of claim 14, wherein said function comprises an instruction that causes activation of an MMI (220) of the pen apparatus.

16. The method of any preceding claim, wherein the online process is further operable to receive a feedback instruction on the communication interface (218), and to activate an MMI (220) of the pen apparatus based upon the feedback instruction.

17. The method of any preceding claim, wherein the online process is further operable to store, in a buffer memory (B) of the pen apparatus, position data extracted from images taken between initiation and establishment of a connection to an external device via the communications interface (218); and, after said establishment, provide the position data stored in the buffer memory (B) and data extracted following said establishment to the external device via the communications interface.

18. The method of claim 17, wherein the online process is further operable to erase the data stored in the buffer memory (B) if said connection fails to be established.

19. The method of claim 17 or 18, wherein the online process is further operable to provide a buffer indicator via the communications interface (218), the buffer indicator identifying the extracted position data that has been stored in the buffer memory (B) before said establishment.

20. The method of claim 19, wherein said buffer indicator comprises an capture timestamp for each data item included in the extracted position data provided on the communications interface (218), and a connection timestamp, said capture timestamp being representative of the time when said data item was recorded in said images and said connection timestamp being representative of the time for the establishment of the connection.

21. The method of any preceding claim, wherein the online process provides a session message comprising a connection timestamp which is representative of the time for establishment of a connection to an external device (302, 304) via the communications interface (218).

22. The method of claim 21, wherein the session message further comprises a pen identifier which uniquely identifies the pen apparatus.

23. The method of any preceding claim, wherein the online process provides the extracted position data as a sequence of data messages, each data message comprising a data item extracted from one of said images.

24. The method of claim 23, wherein each data item comprises a position and a position area identifier.

25. The method of claim 23 or 24, wherein each data message further comprises a timestamp which represents the time when said image was taken.

26. The method of any one of claims 23-25, wherein each data message comprises a force value derived from a force sensor (216) associated with a pen tip (214) of the pen apparatus.

27. The method of any one of claims 23-26, wherein each data message comprises orientation data which is determined from said images and which represents a three-dimensional orientation of the pen apparatus.

28. An electronic pen apparatus, comprising:
an image sensor (206) for capturing images of a product surface;
a communications interface (218); and
a processing device (212)which executes the method of any one of claims 1-27.

29. A system for interacting with a coded product surface, comprising:
the electronic pen apparatus of claim 28;
a communications interface (301') which is operable to establish a connection to the communications interface (218) of the electronic pen;
a controller (308'); and
a feedback device (312');
wherein the controller, when the electronic pen apparatus provides online data, is operable to receive the online data from the pen apparatus via the communications interface and to provide feedback data via the feedback device essentially in real time with the receipt of the online data.

30. The system of claim 29, wherein the controller, when the pen apparatus provides the online data, is operable to retrieve offline data which has been previously provided by the pen apparatus.

31. The system of claim 30, wherein the controller identifies the offline data to be retrieved based upon the online data.

32. The system of claim 29 or 30, wherein the controller operates the online data on the retrieved offline data.

33. The system of any one of claims 29-32wherein the duration of said connection is controlled by the electronic pen apparatus.

## Patentansprüche

1. Verfahren in einer elektronischen Stiftvorrichtung mit den folgenden Schritten:
Empfangen (602) von Bildern einer Produktoberfläche, die mit einem Teil eines Positionscodierungsmusters versehen ist;
Extrahieren (604) von Positionsdaten aus den Bildern;
selektives Verarbeiten (606) der extrahierten Positionsdaten in einen Online-Prozess und einen Offline-Prozess,
wobei der Online-Prozess betriebsfähig ist, die extrahierten Positionsdaten sequentiell an einer Kommunikationsschnittstelle (218) der Stiftvorrichtung bereitzustellen (614); und
wobei der Offline-Prozess betriebsfähig ist, die extrahierten Positionsdaten in einem internen Speicher (M) der Stiftvorrichtung zu speichern (608);
**dadurch gekennzeichnet, dass** der Offline-Prozess ferner betriebsfähig ist, selektiv die extrahierten Positionsdaten in einer nicht sequentiellen Reihenfolge an der Kommunikationsschnittstelle (218) bereitzustellen,
wobei das selektive Bereitstellen der extrahierten Positionsdaten das durch einen Benutzer der elektronischen Stiftvorrichtung ausgelöste Abrufen (610) von extrahierten Positionsdaten aus dem internen Speicher aufweist, die aus einem spezifischen Teil der Positionscodierungsmuster aufgezeichnet werden, und
wobei der Online-Prozess und/oder der Offline-Prozess durch Ermittlung eines vorgegebenen Musters in mindestens einem der Bilder ausgewählt wird, wobei das vorgegebene Muster aus den extrahierten Positionsdaten ermittelt wird.

2. Verfahren nach Anspruch 1, wobei der Online-Prozess betriebsfähig ist, die extrahierten Positionsdaten an der Kommunikationsschnittstelle (218) im Wesentlichen mit dem Extrahieren in Echtzeit bereitzustellen.

3. Verfahren nach Anspruch 1 oder 2, wobei jede Position mit einer Positionsbereichskennung verknüpft ist, und wobei die extrahierten Positionsdaten in der nicht sequentiellen Reihenfolge nach der Positionsbereichskennung sortiert werden.

4. Verfahren nach einem der vorhergehenden Ansprüche, wobei der Offline-Prozess betriebsfähig ist, die extrahierten Positionsdaten in mindestens einem autonomen Datendateiobjekt (300) bereitzustellen, das zur Speicherung in ein Computerdateisystem geeignet ist.

5. Verfahren nach einem der vorhergehenden Ansprüche, wobei der Offline-Prozess betriebsfähig ist, nur bei einer Ermittlung eines zweckbestimmten Auslöseereignis selektiv die extrahierten Positionsdaten bereitzustellen.

6. Verfahren nach Anspruch 5, wobei das zweckbestimmte Auslöseereignis daher herrührt, dass die Kommunikationsschnittstelle (218) mit einem externen Gerät (302, 304) verbunden wird oder dass ein vorgegebenes Muster in mindestens einem der Bilder ermittelt wird.

7. Verfahren nach einem der vorhergehenden Ansprüche, wobei die extrahierten Positionsdaten standardmäßig im Offline-Prozess verarbeitet werden, und wobei die Ermittlung bewirkt, dass Positionsdaten, die anschließend an die Ermittlung extrahiert werden, im Online-Prozess verarbeitet werden.

8. Verfahren nach einem der vorhergehenden Ansprüche, das ferner das Erzeugen eines zweckbestimmten Verarbeitungsereignisses aufweist, um die Ermittlung anzuzeigen.

9. Verfahren nach einem der vorhergehenden Ansprüche, wobei der Online-Prozess nur während der Ermittlung des vorgegebenen Musters in den Bildern aktiviert wird.

10. Verfahren nach einem der vorhergehenden Ansprüche, wobei die extrahierten Daten Positionen in einem globalen Koordinatensystem aufweisen, wobei das Verfahren ferner aufweist: Ableiten einer Prozessanzeige durch Abbilden mindestens einer der Positionen in Abhängigkeit von Definitionsdaten, die in einem Speicher der Stiftvorrichtung gespeichert sind, wobei das vorgegebene Muster aus der Prozessanzeige ermittelt wird.

11. Verfahren nach Anspruch 10, wobei die Definitionsdaten einzeln adressierbare Positionsbereiche im globalen Koordinatensystem anzeigen, wobei jeder Positionsbereich mit einer Positionsbereichskennung verknüpft ist, wobei die Prozessanzeige die Positionsbereichskennung aufweist.

12. Verfahren nach Anspruch 10, wobei die Definitionsdaten einzeln adressierbare Positionsbereiche im globalen Koordinatensystem anzeigen und eine Gruppe solcher Positionsbereiche mit einem Funktionsattribut verknüpfen, wobei die Prozessanzeige das Funktionsattribut aufweist.

13. Verfahren nach einem der vorhergehenden Ansprüche, wobei der Online-Prozess dadurch aktiviert wird, dass der Offline-Prozess selektiv die extrahierten Positionsdaten in einer nicht sequentiellen Reihenfolge an der Kommunikationsschnittstelle (218) bereitstellt.

14. Verfahren nach einem der vorhergehenden Ansprüche, wobei der Offline-Prozess ferner betriebsfähig ist, beruhend auf den extrahierten Positionsdaten eine Funktion zu identifizieren, die durch die Stiftvorrichtung ausgeführt werden soll.

15. Verfahren nach Anspruch 14, wobei die Funktion einen Befehl aufweist, der die Aktivierung einer MMI (220) der Stiftvorrichtung bewirkt.

16. Verfahren nach einem der vorhergehenden Ansprüche, wobei der Online-Prozess ferner betriebsfähig ist, einen Rückkopplungsbefehl an der Kommunikationsschnittstelle (218) zu empfangen, und eine MMI (220) der Stiftvorrichtung beruhend auf dem Rückkopplungsbefehl zu aktivieren.

17. Verfahren nach einem der vorhergehenden Ansprüche, wobei der Online-Prozess ferner betriebsfähig ist, in einem Pufferspeicher (B) der Stiftvorrichtung Positionsdaten zu speichern, die aus Bildern extrahiert werden, die zwischen der Einleitung und Herstellung einer Verbindung mit einem externen Gerät über die Kommunikationsschnittstelle (218) aufgenommen werden; und nach der Herstellung die im Pufferspeicher (B) gespeicherten Positionsdaten und Daten, die anschließend an die Herstellung extrahiert werden, über die Kommunikationsschnittstelle an das externe Gerät zu liefern.

18. Verfahren nach Anspruch 17, wobei der Online-Prozess ferner betriebsfähig ist, die im Pufferspeicher (B) gespeicherten Positionsdaten zu löschen, wenn die Verbindung nicht hergestellt werden kann.

19. Verfahren nach Anspruch 17 oder 18, wobei der Online-Prozess ferner betriebsfähig ist, über die Kommunikationsschnittstelle (218) eine Pufferanzeige bereitzustellen, wobei die Pufferanzeige die extrahierten Positionsdaten kennzeichnet, die im Pufferspeicher (B) vor der Herstellung gespeichert worden sind.

20. Verfahren nach Anspruch 19, wobei die Pufferanzeige einen Aufnahmezeitstempel für jedes Datenelement, das in den extrahierten Positionsdaten enthalten ist, die an der Kommunikationsschnittstelle (218) bereitgestellt werden, und einen Verbindungszeitstempel aufweist, wobei der Aufnahmezeitstempel für die Zeit repräsentativ ist, zu der das Datenelement in den Bildern aufgezeichnet wurde, und der Verbindungszeitstempel für die Zeit der Herstellung der Verbindung repräsentativ ist.

21. Verfahren nach einem der vorhergehenden Ansprüche, wobei der Online-Prozess eine Sitzungsnachricht bereitstellt, die einen Verbindungszeitstempel aufweist, der für die Zeit der Herstellung einer Verbindung mit einem externen Gerät (302, 304) über die Kommunikationsschnittstelle (218) repräsentativ ist.

22. Verfahren nach Anspruch 21, wobei die Sitzungsnachricht ferner eine Stiftkennung aufweist, die die Stiftvorrichtung eindeutig kennzeichnet.

23. Verfahren nach einem der vorhergehenden Ansprüche, wobei der Online-Prozess die extrahierten Positionsdaten als eine Abfolge von Datennachrichten bereitstellt, wobei jede Datennachricht ein Datenelement aufweist, das aus einem der Bilder extrahiert wird.

24. Verfahren nach Anspruch 23, wobei jedes Datenelement eine Position und eine Positionsbereichskennung aufweist.

25. Verfahren nach Anspruch 23 oder 24, wobei jede Datennachricht ferner einen Zeitstempel aufweist, der die Zeit repräsentiert, zu der das Bild aufgenommen wurde.

26. Verfahren nach einem der Ansprüche 23 bis 25, wobei jede Datennachricht einen Kraftwert aufweist, der von einem Kraftsensor (216) hergeleitet wird, der mit einer Stiftspitze (214) der Stiftvorrichtung verbunden ist.

27. Verfahren nach einem der Ansprüche 23 bis 26, wobei jede Datennachricht Orientierungsdaten aufweist, die aus den Bildern bestimmt werden und die eine dreidimensionale Orientierung der Stiftvorrichtung repräsentieren.

28. Elektronische Stiftvorrichtung, die Folgendes aufweist:
einen Bildsensor (206) zur Aufnahme von Bildern einer Produktoberfläche;
eine Kommunikationsschnittstelle (218); und
eine Verarbeitungsvorrichtung (212), die das Verfahren nach einem der Ansprüche 1 bis 27 ausführt.

29. System zur Wechselwirkung mit einer codierten Produktoberfläche, das Folgendes aufweist:
die elektronische Stiftvorrichtung nach Anspruch 28;
eine Kommunikationsschnittstelle (301'), die betriebsfähig ist, eine Verbindung mit der Kommunikationsschnittstelle (218) des elektronischen Stifts herzustellen;
einen Kontroller (308'); und
eine Rückkopplungsvorrichtung (312');
wobei der Kontroller, wenn die elektronische Stiftvorrichtung Online-Daten liefert, betriebsfähig ist, die Online-Daten über die Kommunikationsschnittstelle von der Stiftvorrichtung zu empfangen und über die Rückkopplungsvorrichtung mit dem Empfang der Online-Daten im Wesentlichen in Echtzeit Rückkopplungsdaten bereitzustellen.

30. System nach Anspruch 29, wobei der Kontroller, wenn die Stiftvorrichtung die Online-Daten liefert, betriebsfähig ist, Offline-Daten abzurufen, die vorhergehend durch die Stiftvorrichtung bereitgestellt wurden.

31. System nach Anspruch 30, wobei der Kontroller die abzurufenden Offline-Daten beruhend auf den Online-Daten identifiziert.

32. System nach Anspruch 29 oder 30, wobei der Kontroller die Online-Daten gemäß den abgerufenen Offline-Daten verarbeitet.

33. System nach einem der Ansprüche 29 bis 32, wobei die Dauer der Verbindung durch die elektronische Stiftvorrichtung gesteuert wird.

## Revendications

1. Procédé dans un appareil de stylo électronique, comprenant les étapes suivantes :
recevoir (602) des images d'une surface de produit comportant une partie d'un schéma de codage de position ;
extraire (604) des données de position à partir desdites images ;
traiter sélectivement (606) les données de position extraites dans un processus en ligne et dans un processus hors ligne,
le processus en ligne permettant de fournir séquentiellement (614) les données de position extraites sur une interface de communication (218) de l'appareil de stylo ; et
le processus hors ligne permettant de stocker (608) les données de position extraites dans une mémoire interne (M) de l'appareil de stylo ;
**caractérisé en ce que** le processus hors ligne permet en outre de fournir sélectivement les données de position extraites dans un ordre non séquentiel sur l'interface de communication (218),
l'étape consistant à fournir sélectivement les données de position extraites comprend récupérer (610), à partir de la mémoire interne et suite à la commande initiée par un utilisateur de l'appareil de stylo électronique, des données de position extraites enregistrées à partir d'une partie spécifique du schéma de codage de position, et
au moins un processus parmi le processus en ligne et le processus hors ligne étant sélectionné par la détection d'un schéma prédéterminé dans au moins une desdites images, ledit schéma prédéterminé étant détecté à partir des données de position extraites.

2. Procédé selon la revendication 1, dans lequel le processus en ligne permet de fournir les données de position extraites sur l'interface de communication (218) essentiellement en temps réel avec ladite extraction.

3. Procédé selon la revendication 1 ou 2, dans lequel chaque position est associée à un identifiant de zone de position, les données de position extraites dans ledit ordre non séquentiel étant fusionnées par l'identifiant de zone de position.

4. Procédé selon l'une quelconque des revendications précédentes, dans lequel le processus hors ligne permet de fournir les données de position extraites dans au moins un objet de fichier de données autonome (300) qui est approprié pour être stocké dans un système de fichier informatique.

5. Procédé selon l'une quelconque des revendications précédentes, dans lequel le processus hors ligne permet de fournir sélectivement les données de position extraites uniquement lors de la détection d'un événement de déclenchement dédié.

6. Procédé selon la revendication 5, dans lequel l'événement de déclenchement dédié résulte de l'interface de communication (218) qui est connectée à un dispositif externe (302, 304), ou d'un schéma prédéterminé qui est détecté dans au moins une desdites images.

7. Procédé selon l'une quelconque des revendications précédentes, dans lequel les données de position extraites par défaut sont traitées dans le processus hors ligne, ladite détection provoquant le traitement dans le processus en ligne des données de position extraites subséquemment à ladite détection.

8. Procédé selon l'une quelconque des revendications précédentes, consistant en outre à générer un événement de traitement dédié pour indiquer ladite détection.

9. Procédé selon l'une quelconque des revendications précédentes, dans lequel le processus en ligne est activé uniquement durant ladite détection du schéma prédéterminé dans lesdites images.

10. Procédé selon l'une quelconque des revendications précédentes, dans lequel les données extraites comprennent des positions dans un système de coordonnées global, ledit procédé comportant en outre l'étape suivante : dériver un indicateur de processus en mappant au moins une desdites positions à des données de définition stockées dans une mémoire de l'appareil de stylo, le schéma prédéterminé étant détecté à partir dudit indicateur de processus.

11. Procédé selon la revendication 10, dans lequel les données de définition indiquent des zones de position adressables individuellement dans le système de coordonnées global, chaque zone de position étant associée à un identifiant de zone de position, l'indicateur de processus contenant ledit identifiant de zone de position.

12. Procédé selon la revendication 10, dans lequel les données de définition indiquent des zones de position adressables individuellement dans le système de coordonnées global et associent un ensemble de telles zones de position à un attribut fonctionnel, l'indicateur de processus contenant ledit attribut fonctionnel.

13. Procédé selon l'une quelconque des revendications précédentes, dans lequel le processus en ligne est activé par le processus hors ligne fournissant sélectivement les données de position extraites dans un ordre non séquentiel sur l'interface de communication (218).

14. Procédé selon l'une quelconque des revendications précédentes, dans lequel le processus hors ligne permet en outre d'identifier, sur la base des données de position extraites, une fonction devant être exécutée par l'appareil de stylo.

15. Procédé selon la revendication 14, dans lequel ladite fonction comprend une instruction qui provoque l'activation d'un MMI (220) de l'appareil de stylo.

16. Procédé selon l'une quelconque des revendications précédentes, dans lequel le processus en ligne permet en outre de recevoir une instruction de rétroaction sur l'interface de communication (218), et d'activer un MMI (220) de l'appareil de stylo en se basant sur l'instruction de rétroaction.

17. Procédé selon l'une quelconque des revendications précédentes, dans lequel le processus en ligne permet en outre de stocker, dans une mémoire tampon (B) de l'appareil de stylo, des données de position extraites à partir des images prises entre l'initiation et l'établissement d'une connexion à un dispositif externe par l'intermédiaire de l'interface de communication (218) ; et de fournir, après ledit établissement, les données de position stockées dans la mémoire tampon (B) et des données extraites après ledit établissement au dispositif externe par l'intermédiaire de l'interface de communication.

18. Procédé selon la revendication 17, dans lequel le processus en ligne permet en outre d'effacer les données stockées dans la mémoire tampon (B) si l'établissement de ladite connexion échoue.

19. Procédé selon la revendication 17 ou 18, dans lequel le processus en ligne permet en outre de fournir un indicateur de tampon par l'intermédiaire de l'interface de communication (218), l'indicateur de tampon identifiant les données de position extraites qui ont été stockées dans la mémoire tampon (B) avant ledit établissement.

20. Procédé selon la revendication 19, dans lequel ledit indicateur de tampon comprend une estampille temporelle de capture pour chaque élément de données inclus dans les données de position extraites fournies sur l'interface de communication (218), et une estampille temporelle de connexion, ladite estampille temporelle de capture représentant le temps auquel ledit élément de données a été enregistré dans lesdites images et ladite estampille de connexion représentant le temps de l'établissement de la connexion.

21. Procédé selon l'une quelconque des revendications précédentes, dans lequel le processus en ligne fournit un message de session comprenant une estampille temporelle de connexion qui représente le temps d'établissement d'une connexion à un dispositif externe (302, 304) par l'intermédiaire de l'interface de communication (218).

22. Procédé selon la revendication 21, dans lequel le message de session comprend en outre un identifiant de stylo qui identifie de manière unique l'appareil de stylo.

23. Procédé selon l'une quelconque des revendications précédentes, dans lequel le processus en ligne fournit les données de position extraites comme une séquence de messages de données, chaque message de données comportant un élément de données extrait à partir de l'une desdites images.

24. Procédé selon la revendication 23, dans lequel chaque élément de données comprend une position et un identifiant de zone de position.

25. Procédé selon la revendication 23 ou 24, dans lequel chaque message de données comprend en outre une estampille temporelle qui représente le temps auquel ladite image a été prise.

26. Procédé selon l'une quelconque des revendications 23-25, dans lequel chaque message de données comprend une valeur de force dérivée à partir d'un capteur de force (216) associé à une extrémité de stylo (214) de l'appareil de stylo.

27. Procédé selon l'une quelconque des revendications 23-26, dans lequel chaque message de données comprend des données d'orientation qui sont déterminées à partir desdites images et qui représentent une orientation tridimensionnelle de l'appareil de stylo.

28. Appareil de stylo électronique, comprenant :
un capteur d'image (206) destiné à capturer des images d'une surface de produit ;
une interface de communication (218) ; et
un dispositif de traitement (212) qui exécute le procédé selon l'une quelconque des revendications 1-27.

29. Système permettant d'interagir avec une surface de produit codée, comprenant :
l'appareil de stylo électronique de la revendication 28 ;
une interface de communication (301') qui permet d'établir une connexion à l'interface de communication (218) du stylo électronique ;
un contrôleur (308') ; et
un dispositif de rétroaction (312') ;
le contrôleur permettant de recevoir, lorsque l'appareil de stylo électronique fournit des données en ligne, les données en ligne à partir de l'appareil de stylo par l'intermédiaire de l'interface de communication et de fournir des données de rétroaction par l'intermédiaire du dispositif de rétroaction essentiellement en temps réel avec la réception des données en ligne.

30. Système selon la revendication 29, dans lequel le contrôleur permet de récupérer, lorsque l'appareil de stylo fournit les données en ligne, des données hors ligne qui ont été fournies précédemment par l'appareil de stylo.

31. Système selon la revendication 30, dans lequel le contrôleur identifie les données hors ligne à récupérer sur la base des données en ligne.

32. Système selon la revendication 29 ou 30, dans lequel le contrôleur opère les données en ligne sur les données hors ligne récupérées.

33. Système selon l'une quelconque des revendications 29-32, dans lequel la durée de ladite connexion est commandée par l'appareil de stylo électronique.
